(19)

Europäisches
Patentamt
European
Patent Office
Office européen
des brevets

(11)  EP 2 028 779 A1

(12)  **EUROPEAN PATENT APPLICATION**

(43) Date of publication:
**25.02.2009 Bulletin 2009/09**

(51) Int Cl.:
*H04L 1/18* (2006.01)  *H04L 1/00* (2006.01)

(21) Application number: **07016009.8**

(22) Date of filing: **14.08.2007**

| | |
|---|---|
| (84) Designated Contracting States:<br>**AT BE BG CH CY CZ DE DK EE ES FI FR GB GR HU IE IS IT LI LT LU LV MC MT NL PL PT RO SE SI SK TR**<br>Designated Extension States:<br>**AL BA HR MK RS** | (72) Inventors:<br>• **Frederiksen, Frank**<br>  **9270 Klarup (DK)**<br>• **Kolding, Troels, Dr.**<br>  **9270 Klarup (DK)** |
| (71) Applicant: **Nokia Siemens Networks Oy**<br>**02610 Espoo (FI)** | (74) Representative: **Bruglachner, Thomas E.**<br>**Nokia Siemens Networks GmbH & Co. KG**<br>**Patentabteilung**<br>**Postfach 80 17 60**<br>**81617 München (DE)** |

(54) **Method and device for HARQ processing in a network and communication system comprising such device**

(57)  A method and a device for data processing in a network, in particular a communication network, e.g., a 3GPP LTE network, are provided, the method comprising the step of: Providing at least one signaling resource for multiple transmission time interval allocation.

FIG 2

EP 2 028 779 A1

**Description**

The invention relates to a method and to a device for data processing in a network and to a communication system comprising such a device.

For details on Long Term Evolution of 3GPP reference is made to [1] and [2].

3GPP LTE (Long Term Evolution) is the name given to a project within the Third Generation Partnership Project (3GPP) to improve the UMTS mobile phone standard to cope with future requirements. Goals include improving efficiency, lowering costs, improving services, making use of new spectrum opportunities, and better integration with open standards.

Hybrid Automatic Repeat Request (Hybrid ARQ, H-ARQ) is a variation of an ARQ error control method, which performs better ARQ, particularly over wireless channels (see [4]).

An example of HARQ, also referred to as Type I HARQ, combines forward error correction (FER) and ARQ by encoding the data block plus error-detection information (such as cyclic redundancy check, CRC) with an error-correction code (such as Reed-Solomon code or Turbo code) prior to transmission. When the coded data block is received, the receiver first decodes the error-correction code. If the channel quality is good enough, all transmission errors should be correctable, and the receiver can obtain the correct data block. If the channel quality is bad and not all transmission errors can be corrected, the receiver will detect this situation using the error-detection code, then the received coded data block is discarded and a retransmission is requested by the receiver, similar to ARQ.

In practice, incorrectly received coded data blocks are often stored at the receiver rather than discarded, and when the retransmitted block is received, the two blocks are combined (chase combining) before being fed to the decoder of the error-correction code. This can increase the probability of successful decoding.

A further proposed improvement is Type II/III HARQ, or incremental redundancy HARQ, where different (re) transmissions are coded differently rather than repeating the same coded bits as in Chase combining. Performance is even better, since coding is effectively done across retransmissions. The difference between type III HARQ and type II HARQ is that the retransmission packets in Type III HARQ can be decoded by themselves.

Further, reference is made to a Time Division Duplex (TDD) mode as well as to a Frequency Division Duplex (FDD) mode of 3GPP (see, e.g., [3] for further details).

The **problem** to be solved is to provide an efficient confirmation mechanism that in particular works well in a Time Division Duplex (TDD) mode.

This problem is solved according to the features of the independent claims. Further embodiments result from the depending claims.

In order to overcome this problem, a method for data processing in a network, in particular a communication network, e.g., a 3GPP LTE network, is provided comprising the step of: Providing at least one signaling resource for multiple transmission time interval allocation.

The approach suggested allows scheduling over multiple subframes or Transmission Time Intervals TTIs (also referred to as "multi-TTI") to a user.

In a Frequency Division Duplex (FDD) mode, however, a scheduler only considers one subframe at a time.

Advantages of such an approach are in particular a reduction of overhead for transmitting allocation information in downlink and ACK/NACK reports in uplink direction as well as an increased coverage gain in the uplink.

In particular, a Hybrid Automatic Repeat Request (H-ARQ) is utilized when operating in multi-TTI mode. The H-ARQ allows the packet scheduler to operate at challenging Block Error Rate (BLER) targets, which in turn means that the spectral efficiency is increased. The operating point for H-ARQ may preferably be at a BLER of 10-30%.

In order for the H-ARQ mechanism to work properly, a return channel carrying acknowledgements (ACK) as well as negative acknowledgements (NACK) is provided such that the transmitting part knows whether to transmit a new packet or to do a H-ARQ retransmission.

This approach in particular suggests to assign H-ARQ "channels", which are in particular utilized for uplink data transmissions (that is, the ACK/NACK channel is created in the downlink).

In a further embodiment, the uplink H-ARQ is operated in a synchronous and non-adaptive manner.

Hence, it is preferably pre-determined when and on which resources an uplink retransmission will take place and thus multi-TTI allocations can be provided also for a retransmission.

In the FDD mode there is a 1-to-1 mapping from the "uplink allocation order" (meaning the control channel ID for an uplink allocation) to the ACK/NACK channel in the downlink. This, however, is an approach to compress a signaling overhead by allowing the ACK/NACK entry relate to the allocations rather than in a dedicated way to each particular user (since there could be many, e.g., more than 400 users).

Also the ACK/NACK channel can be based on code division multiplexing CDM (meaning, e.g., that a set of resources is reserved for ACK/NACK transmission purposes, and then a set of codes is used to discriminate between different User Equipments UEs). An advantage of using CDM is that users will be orthogonal to each other during reception, and that they share the resources in the power domain. However, for multi-TTI operation, there is no more 1-to-1 relationship between the allocation order (since the allocation order is defined relative to the position of the first allocation information, and the end of transmission is time-wise placed at a later instant). This particular problem is also solved by the approach provided herein.

In an embodiment, the at least one signaling resource comprises an ACK/NACK signaling resource.

Such ACK/NACK signaling resource may provide positive and negative acknowledgements, in particular depending upon a (successful or not) receipt of data.

In another embodiment this approach utilizes a H-ARQ protocol.

In a further embodiment, the at least one signaling resource is set up such that an amount of codes available is used (in particular suffices) to cover a signaling and/or an assignment of code resources as a function of an uplink allocation order.

In a next embodiment, a predetermined amount of physical resources is assigned to the at least one signaling resource.

It is also an embodiment that the predetermined amount of physical resources is larger than a predetermined number of uplink allocations per transmission time interval.

Pursuant to another embodiment, the predetermined amount of physical resources is larger than a predetermined number of uplink allocations per transmission time interval multiplied by a number of subframes according to the multiple transmission time intervals.

According to an embodiment, resources allocated are utilized for robustness purposes of the at least one signaling resource.

According to another embodiment, the network is a communication network, in particular a 3GPP LTE network.

In yet another embodiment, the multiple transmission time intervals refer and/or correspond to multiple subframes.

According to a next embodiment, the approach presented utilizes a time division duplex mode of the network.

The problem stated supra is also solved by a device for data processing comprising a processor unit that is equipped and/or arranged such that the method as described herein is executable on said processor unit.

As an embodiment, said device is a communication device, in particular a network element of a 3GPP network. The device can in particular be a Node B or a UE of the network.

The problem stated above is also solved by a communication system comprising the device as described herein.

Embodiments of the invention are shown and illustrated in the following figures:

Fig.1   shows a diagram depicting the approach of dividing a Walsh code tree into (reserved) "branches" for different multi-TTI configurations (Multi-TTI = 1, 2 and 4);

Fig.2   shows an illustration visualizing a time-wise flow from an uplink allocation to the transmission for the associated ACK/NACK signal.

The approach presented and described herein suggests providing an ACK/NACK channel in such a way that an amount of codes available for signaling purposes is sufficiently large to also cover implicit signaling and/or assignment of code resources as a function of the uplink allocation order.

This is in particular feasible in case an amount of physical resources assigned for the ACK/NACK channel is larger than the maximum number of uplink allocations per TTI multiplied by the maximum number of sub-frame options that a multi-TTI might span.

Hence, preferably only the number of possible combinations needs reservation of a set of ACK/NACK channels, such that for instance 1,2, and 4 multi-TTIs will only occupy 3 times the amount of ACK/NACK channels needed for single-TTI allocation.

An overhead in codes appear to be quite large when using multi-TTI compared to single-TTI. For example, supporting three different TTI lengths (say 1, 2 sub-frames) this may lead to an overhead of x2. However, in order to allocate more resource elements than needed by the single-TTI multiplexing order to allow sufficient coverage and robustness of the ACK/NACK channel such overhead can be advantageously utilized.

For illustration purposes of the concept provided herewith, e.g., 64 resource elements reserved for the ACK/NACK channel are considered. This corresponds to 128 bits on the physical channel with QPSK. Now, to separate users in this channel, a set of orthogonal codes (or semi-orthogonal codes) may be used, where, e.g., Walsh codes could be used. Walsh codes can be described by a code tree, wherein codes of a same level within the tree are orthogonal to each other. Only if codes in a tree share a node in the up/down direction, the orthogonality will be lost. Now, regarding this example, a set of codes may span 128 possibilities. If there is a limitation in the system that only allows, e.g., 16 simultaneous users being scheduled, there are several codes available for further or alternative usage.

One way to utilize these codes is to define the Walsh code to use in such a way that the code for multi-TTI operation can be expressed as:

$$Code_{M\text{-}TTI} = maxUlAlloc * M + allocationOrder, \qquad (1)$$

where

maxUlAlloc      is the maximum number of simultaneous uplink allocations,

M      is the index into a set of numbers indicating the amount of TTIs that is spanned for multi-TTI operation,

allocationOrder      is the allocation order from the original allocation assignment (for the multi-TTI operation).

It is noted that the allocation order refers to the allocation information related to the initial allocation, such that each "branch" of the Walsh code tree refers to a certain multi-TTI configuration (for a certain multi-TTI setting, there will be a corresponding delay until the actual ACK/NACK channel is active, but within a branch the delays will be the same). In such way it can be assured that there will still be implicit signaling of ACK/NACK resources while preserving orthogonality between the ACK/NACK channels.

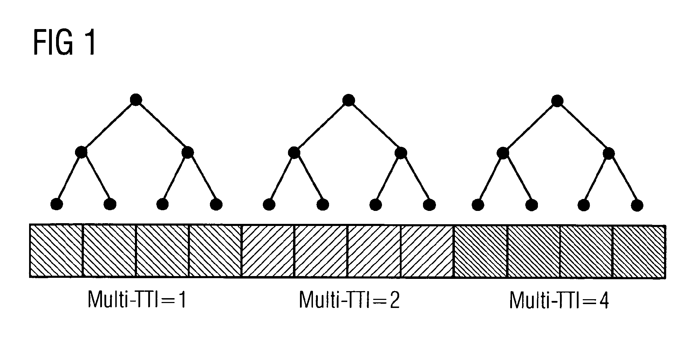

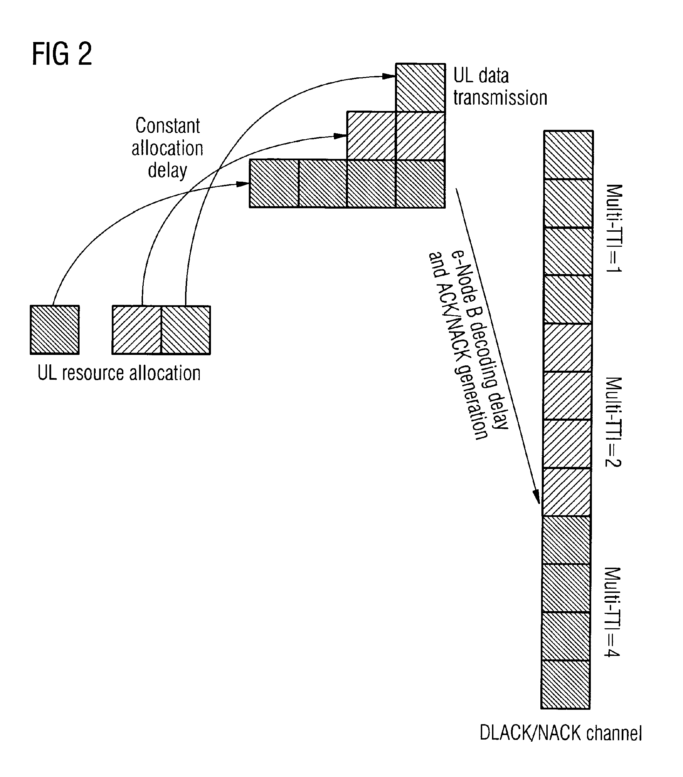

These principles are shown in Fig.1 and in Fig.2.

**Fig.1** illustrates in a diagram the approach of dividing a Walsh code tree into (reserved) "branches" for different multi-TTI configurations (Multi-TTI = 1, 2 and 4).

In **Fig.2** an illustration is depicted visualizing a time-wise flow from an uplink allocation to the transmission for the associated ACK/NACK signal.

It is further to be noted that the proposal set forth can be modified to allow a smaller set of orthogonal codes (in case the amount of physical resources is reduced). Such reduction can be obtained by limiting the number of users that are allowed operating in multi-TTI, such that the above equation (1) can be written as:

$$CodeM\text{-}TTI = maxUlAlloc + K* (M-1) + + allocationOrder, \qquad (2)$$

where

K      is the maximum number of multi-TTI users, and

allocationOrder      is now calculated from the position of the first multi-TTI allocation.

**Abbreviations:**

| | |
|---|---|
| 3GPP | Third Generation Partnership Project |
| ACK | Acknowledgement (Message) |
| BLER | Block Error Rate |
| CDM | Code Division Multiplexing |
| FDD | Frequency Division Duplex |
| H-ARQ | Hybrid Automatic Repeat Request |
| H-RNTI | HS-DSCH Radio Network Transaction Identifier |
| HSDPA | High Speed Downlink Packet Access |
| HSUPA | High Speed Uplink Packet Access |
| LTE | Long Term Evolution |
| NACK | Negative Acknowledgement (Message) |
| QPSK | Quadrature Phase Shift Keying |
| TDD | Time Division Duplex |
| TTI | Transmission Time Interval |
| UE | User Equipment |
| UMTS | Universal Mobile Telecommunications System |

**References:**

[1] Wikipedia: http://en.wikipedia.org/wiki/3GPP_Long_Term_Evolution

[2] 3GPP TS 23.401, 3GPP TS 23.402, see in particular: http://www.3gpp.org/ftp/Specs/html-info/23-series.htm

[3] H. Holma, A. Toskala: WCDMA for UMTS, Radio Access for Third Generation Mobile Communications, 3rd Edition, John Wiley & Sons Ltd., 2004, page 412.

[4] Wikipedia: http://en.wikipedia.org/wiki/Hybrid_ARQ

**Claims**

1.  A method for data processing in a network comprising the following steps:

    - Providing at least one signaling resource for multiple transmission time interval allocation.

2.  The method according to claim 1, wherein the at least one signaling resource comprises an ACK/NACK signaling resource.

3.  The method according to any of the preceding claims utilizing a Hybrid Automatic Repeat Request protocol.

4.  The method according to claim 3, wherein the Hybrid Automatic Repeat Request protocol in uplink direction operates in a synchronous and/or in a non-adaptive manner.

5.  The method according to any of the preceding claims, wherein the at least one signaling resource is set up such that an amount of codes available is used to in particular cover a signaling and/or an assignment of code resources as a function of an uplink allocation order.

6.  The method according to any of the preceding claims, wherein a predetermined amount of physical resources is assigned to the at least one signaling resource.

7.  The method according to claim 6, wherein the predetermined amount of physical resources is larger than a predetermined number of uplink allocations per transmission time interval.

8.  The method according to claim 7, wherein the predetermined amount of physical resources is larger than a predetermined number of uplink allocations per transmission time interval multiplied by a number of sub-frames according to the multiple transmission time intervals.

9.  The method according to any of the preceding claims, wherein resources allocated are utilized for robustness purposes of the at least one signaling resource.

10. The method according to any of the preceding claims, wherein the network is a communication network, in particular a 3GPP LTE network.

11. The method according to any of the preceding claims, wherein the multiple transmission time intervals refer to multiple subframes.

12. The method according to any of the preceding claims utilizing a time division duplex mode of the network.

13. A device for data processing comprising a processor unit that is arranged such that the method according of any of the preceding claims is executable on said processor unit.

14. The device according to claim 13, wherein said device is a communication device, in particular a network element of a 3GPP network

**15.** Communication system comprising the device according to any of claims 13 or 14.

# FIG 1

Multi-TTI=1          Multi-TTI=2          Multi-TTI=4

# FIG 2

Constant allocation delay

UL data transmission

e-Node B decoding delay and ACK/NACK generation

UL resource allocation

Multi-TTI = 1

Multi-TTI = 2

Multi-TTI = 4

DLACK/NACK channel

Europäisches
Patentamt

European
Patent Office

Office européen
des brevets

## EUROPEAN SEARCH REPORT

Application Number

EP 07 01 6009

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/006732 A1 (LUNDBY STEIN A [US]) 8 January 2004 (2004-01-08) * page 2, right-hand column, paragraph 23 - paragraph 24 * * page 3, left-hand column, paragraph 29 * * page 3, right-hand column, paragraph 33 * * page 4, right-hand column, paragraph 43 - paragraph 46 * * page 5, right-hand column, paragraph 57 * * page 6, left-hand column, paragraph 59 - paragraph 60; figure 3 * | 1-15 | INV. H04L1/18 H04L1/00 |
| X | US 2006/282740 A1 (GU JIAN [CN] ET AL) 14 December 2006 (2006-12-14) * page 1, right-hand column, paragraph 5 - page 2, left-hand column, paragraph 10 * * page 2, left-hand column, paragraph 15 * * page 2, right-hand column, paragraph 22 - paragraph 23 * * page 3, right-hand column, paragraph 40 - paragraph 42 * * page 4, left-hand column, paragraph 46 - paragraph 47 * | 1-7,9-15 | TECHNICAL FIELDS SEARCHED (IPC) H04L |
| X | US 2004/085934 A1 (BALACHANDRAN KRISHNA [US] ET AL) 6 May 2004 (2004-05-06) * page 3, left-hand column, paragraph 30 - paragraph 31 * * page 2, right-hand column, paragraph 22 - paragraph 26 * * page 5, right-hand column, paragraph 59 - page 6, right-hand column, paragraph 68 * | 1-7,9-15 | |

-/--

The present search report has been drawn up for all claims

| Place of search | Date of completion of the search | Examiner |
|---|---|---|
| The Hague | 16 January 2009 | Papantoniou, Antonis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**Europäisches Patentamt**
**European Patent Office**
**Office européen des brevets**

## EUROPEAN SEARCH REPORT

Application Number

EP 07 01 6009

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2007/084065 A (ERICSSON TELEFON AB L M [SE]; PARKVALL STEFAN [SE]; DAHLMAN ERIK [SE];) 26 July 2007 (2007-07-26) * page 6, line 19 - page 7, line 30 * ----- | 1-7,9-15 | |
| X | WO 2005/109725 A (KONINKL PHILIPS ELECTRONICS NV [NL]; BAKER MATTHEW P J [GB]; MOULSLEY) 17 November 2005 (2005-11-17) * page 1, line 12 - line 21 * * page 2, line 5 - line 14 * * page 6, line 18 - page 7, line 22 * * page 8, line 6 - page 9, line 2 * ----- | 1-4,9-15 | |
| | | | TECHNICAL FIELDS SEARCHED (IPC) |

The present search report has been drawn up for all claims

| Place of search | Date of completion of the search | Examiner |
|---|---|---|
| The Hague | 16 January 2009 | Papantoniou, Antonis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.....................................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**    EP 07 01 6009

This annex lists the patent family members relating to the patent documents cited in the above-mentioned European search report.
The members are as contained in the European Patent Office EDP file on
The European Patent Office is in no way liable for these particulars which are merely given for the purpose of information.

16-01-2009

| Patent document cited in search report | | Publication date | Patent family member(s) | | Publication date |
|---|---|---|---|---|---|
| US 2004006732 | A1 | 08-01-2004 | AU 2003247918 A1<br>BR 0312512 A<br>CN 1679270 A<br>EP 1525702 A1<br>JP 2005532746 T<br>KR 20050025954 A<br>WO 2004006491 A1<br>US 2007116030 A1 | | 23-01-2004<br>10-05-2005<br>05-10-2005<br>27-04-2005<br>27-10-2005<br>14-03-2005<br>15-01-2004<br>24-05-2007 |
| US 2006282740 | A1 | 14-12-2006 | NONE | | |
| US 2004085934 | A1 | 06-05-2004 | NONE | | |
| WO 2007084065 | A | 26-07-2007 | NONE | | |
| WO 2005109725 | A | 17-11-2005 | CN 1951057 A<br>EP 1751905 A1<br>JP 2007536866 T<br>US 2007223416 A1 | | 18-04-2007<br>14-02-2007<br>13-12-2007<br>27-09-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **H. HOLMA ; A. TOSKALA.** WCDMA for UMTS, Radio Access for Third Generation Mobile Communications. John Wiley & Sons Ltd, 2004, 412